## Europäisches Patentamt
## European Patent Office
## Office européen des brevets

(11) Veröffentlichungsnummer: **0 137 126**
**B1**

(12) # EUROPÄISCHE PATENTSCHRIFT

(45) Veröffentlichungstag der Patentschrift:
**15.10.86**

(21) Anmeldenummer: **84107708.4**

(22) Anmeldetag: **03.07.84**

(51) Int. Cl.⁴: **B 27 K 3/52,** B 27 K 3/50,
C 08 L 13/00, C 08 L 45/00

(54) **Wasserverdünnbares Konzentrat, wässriges Mittel und Verfahren zur Behandlung von Holz.**

(30) Priorität: **31.08.83 DE 3331400**

(43) Veröffentlichungstag der Anmeldung:
**17.04.85 Patentblatt 85/16**

(45) Bekanntmachung des Hinweises auf die Patenterteilung:
**15.10.86 Patentblatt 86/42**

(84) Benannte Vertragsstaaten:
**AT BE CH DE FR GB IT LI NL SE**

(56) Entgegenhaltungen:
**DE-A-2 407 300**
**DE-A-3 200 782**
**DE-B-2 838 930**
**US-A-3 551 193**

(73) Patentinhaber: **HÜLS AKTIENGESELLSCHAFT,**
**Patentabteilung / PB 15 - Postfach 13 20, D-4370**
**Marl 1 (DE)**

(72) Erfinder: **Zagefka, Hans- Dieter, Dr., Im**
**Dahläckern 11, D-4358 Haltern (DE)**

LIBER, STOCKHOLM 1986

## Beschreibung

Die Anmeldung betrifft ein wasserverdünnbares Konzentrat, ein wäßriges Mittel und ein Verfahren zur Behandlung von Holz gemäß dem Oberbegriff von Patentanspruch 1 bzw. 2.

Unter Holz werden alle Arten von Holz und Holzwerkstoffen, welche eine offenporige, den Applikationsmethoden der Imprägniertechnik zugängliche Struktur aufweisen, verstanden. Holzwerkstoffe sind beispielsweise Sperrholz, Tischlerplatten und Spanplatten.

Unter Holzschutzwirkstoffen werden holzschützende, biozide, die Lufttrocknung nicht inhibierende Wirkstoffe, und zwar in erster Linie solche mit insektizider und/oder fungizider Wirkung, verstanden.

Die Anmeldung führt hin zur Imprägniertechnik von Holz und verwandten Techniken. Dabei wird ein wirksamer und dauerhafter Holzschutz angestrebt. In diesem Zusammenhang wird es als wichtig angesehen, das Bindemittel oder das Bindemittel und den Holzschutzwirkstoff in ausreichender Konzentration in die zu schützenden Holzteile zu transportieren (Penetration) und dort zu fixieren. Dabei kann unter Umständen zusätzlich eine dekorative Funktion in der Oberfläche des Holzes erzielt werden.

Die Anmeldung führt nicht hin zur Lackiertechnik von Holz. Dort wird eine dekorative Funktion in der Holzoberfläche, jedenfalls keine Tiefenwirkung, angestrebt (Überzugsmittel zur Oberflächenbeschichtung von Holz).

Auf dem Gebiet der Anmeldung sind bereits die DE-PS 28 38 930 und die DE-OSS 30 26 300 und 32 00 782 bekannt. (Auf dem Gebiet der Anmeldung gibt es noch die DE-Patentanmeldung mit dem Aktenzeichen P 32 14 196.) Das mit den dort beschriebenen übliche Trockenstoffe (Sikkative) enthaltenden Mitteln behandelte Holz weist bei der Lufttrocknung ein Trocknungsverhalten auf, das den Anforderungen der Praxis nicht immer genügt. Die Trocknung ist in der Regel erst nach 24 h ausreichend fortgeschritten, um imprägniertes Holz der Witterung ausgesetzt im Freien lagern zu können, ohne mit dem Auswaschen von Bindemittel oder Bindemittel und Holzschutzwirkstoff rechnen zu müssen.

Die Aufgabe bestand darin, diesen Mangel zu überwinden und ein wasserverdünnbares Konzentrat, ein wäßriges Mittel und ein Verfahren zur Behandlung von Holz bereitzustellen, die es dem Fachmann ermöglichen, die Trocknungszeit bei der Lufttrocknung wesentlich zu verkürzen.

Die Aufgabe wurde überraschenderweise wie in den Patentansprüchen angegeben gelöst.

I. Die anmeldungsgemäß verwendeten Polymerisate können Copolymerisate aus a) einem oder mehreren 1,3-(Cyclo)dienen, wie 1,3-Butadien und Cyclopentadien, oder b) einem oder mehreren 1,3-(Cyclo)dienen und einem oder mehreren copolymerisierbaren Olefinen, wie Styrol, oder c) den Monomeren gemäß a) oder b) und zusätzlich einem oder mehreren (Di)estern von $\alpha$, $\beta$-olefinisch ungesättigten (Di)carbonsäuren einerseits und einer oder mehreren $\alpha$, $\beta$-olefinisch ungesättigten (Di)carbonsäuren und/oder einem oder mehreren der Halbester der Dicarbonsäuren andererseits sein.

Die Carbonsäuren sind beispielsweise Acryl- und Methacrylsäure. Die Dicarbonsäuren sind beispielsweise Malein- und Fumarsäure. Bevorzugte Alkoholkomponenten der Ester sind einwertige, gegebenenfalls Ethergruppen enthaltende $C_1$- bis $C_{10}$-Alkanole oder ihre Gemische.

Die Polymerisate sind grundsätzlich bekannt und können nach bekannten Verfahren hergestellt werden, (Ullman, Enzyklopädie der technischen Chemie, Bd 15, 4. Aufl., Weinheim (1978), S.598).

II. Die anmeldungsgemäß verwendeten Polymerisate sind vorzugsweise Addukte aus den im folgenden charakterisierten Basispolymerisaten und einer Säurekomponente aus der Gruppe, bestehend aus $\alpha,\beta$-olefinisch ungesättigten Dicarbonsäuren, ihren Anhydriden und Halbestern und Gemischen und gegebenenfalls zusätzlich einem oder mehreren Diestern der Dicarbonsäuren.

Die Basispolymerisate sind Homopolymerisate von 1,3-(Cyclo)dienen oder Copolymerisate von 1,3-(Cyclo)dienen oder von einem oder mehreren 1,3-(Cyclo)dienen und einem oder mehreren copolymerisierbaren Olefinen. Sie können durch Isomerisierung, partielle Cyclisierung oder partielle Hydrierung modifiziert sein.

Die im Zusammenhang mit der ersten Gruppe von anmeldungsgemäßen Polymerisaten beispielhaft genannten Monomeren (s. Absatz I) gelten auch beispielhaft für die Basispolymerisate und Säurekomponenten der Addukte.

Die Estergruppen enthaltenden Addukte können auf direktem oder indirektem Wege, d. h. durch nachträgliche, partielle Veresterung der Addukte, erhalten werden.

Bevorzugte Alkoholkomponenten zur nachträglichen Veresterung sind gesättigte oder olefinisch oder acetylenisch ungesättigte, einwertige, gegebenenfalls Ethergruppen enthaltende $C_1$- bis $C_{10}$-Alkohole oder ihre Gemische. Die durch nachträgliche Veresterung modifizierten Addukte sind bevorzugt. Sie weisen vorzugsweise eine Säurezahl von 50 bis 125 [mg KOH/g] auf.

Die Polymerisate sind grundsätzlich bekannt und können nach bekannten Verfahren hergestellt werden (DE-PS 28 38 930).

Als Holzschutzwirkstoffe können übliche Holzschutzwirkstoffe eingesetzt werden.

Geeignete, nicht wasserlösliche Holzschutzwirkstoffe sind beispielsweise 2.5-Dimethylfuran-3-carbonsäure-N-methoxy-N-cyclohexylamid, Tributylzinn-benzoat, Tributylzinn-naphthenat, γ-Hexachlorcyclohexan, Pentachlorphenol, Pentachlorphenol-laurat, 2-Mercapto-benzthiadiazol-2, 2-(Methoxycarbonylamino)-benzimidazol, N,N-Dimethyl-N'-phenyl-N'-(fluordichlormethylthio)sulfamid, N,N-Dimethyl-N'-p-tolyl-N'-(fluordichlormethylthio)-sulfamid, Carbamate, Dithiocarbamate, Phosphorsäureester, Phosphonsäureester, Thiophosphorsäureester, Dithiophosphorsäureester, Thionophosphorsäureester, o-Phenylphenol, Hydroxychinolinderivate, Endosulfan, Pyrethroide und 3-Iod-2-propinyl-butyl-carbamat.

Geeignete, wasserlösliche Holzschutzwirkstoffe sind beispielsweise Alkalifluoride, Silicofluoride, wie MgSiF$_6$, Alkaliarsenate, Borate und Salze des Bleis, Zinns, Cadmiums, Nickels, Kobalts, Mangans, Kupfers, Quecksilbers, Zinks und Chroms, sowie (C$_{12}$- bis C$_{14}$-Alkyl)-benzyldimethylammoniumchlorid.

Übliche Zusatzstoffe sind beispielsweise Pigmente, Hautverhütungsmittel, Stabilisatoren, oberflächenaktive Stoffe, Viskositätsregulatoren und wasserverträgliche Lösemittel.

Geeignete, wasserverträgliche Lösemittel sind beispielsweise Isopropanol, Butanole, Diacetonalkohol, Alkylzellosolven und Dimethylether von Glykolen. Die Lösemittel oder Lösemittelgemische können in Mengen von bis zu 100 Massenteilen, bezogen auf 100 Massenteile Bindemittel, eingesetzt werden. Sie werden vorzugsweise in Mengen von 5 bis 50, besonders bevorzugt von 10 bis 40 Massenteilen eingesetzt.

Unter den auszuschließenden, porenverschließenden Zusätzen werden solche Zusätze verstanden, welche aufgrund ihrer Art und ihrer Konzentration im Behandlungsmittel bei der Applikation einen Porenverschluß des Holzes herbeiführen und dadurch die angestrebte Tiefenwirkung des Behandlungsmittels wesentlich behindern würden.

Zusatzstoffe der beschriebenen Art können in praxisüblichen Mengen zugemischt werden. Dabei richten sich Art und Menge stets nach dem jeweilig zu behandelnden Werkstoff, seinem Verwendungszweck sowie dem Behandlungsverfahren und können durch wenige orientierende Versuche leicht ermittelt werden.

Da die in den erfindungsgemäßen Behandlungsmitteln eingesetzten Bindemittel lufttrocknend sind, ist es im allgemeinen nicht erforderlich, ihnen weitere Harze als Vernetzungsmittel zuzusetzen. Selbstverständlich können weitere Bindemittel, welche - gegebenenfalls bei Wärmebehandlung - als Vernetzungsmittel wirken, wie beispielsweise wasserlösliche Aminoplaste oder Phenolharze, mitverwendet werden, sofern der im Sinne der Aufgabenstellung der vorliegenden Erfindung angestrebte Effekt nicht wesentlich beeinträchtigt wird.

Die erfindungsgemäßen Behandlungsmittel haben im allgemeinen einen Bindemittelgehalt von 1 bis 40, vorzugsweise 5 bis 30 Massen-% und können nach allen bekannten Verfahren des Standes der Technik (vgl. DIN 68 800, Blatt 3) appliziert werden. Dabei ist die erzielbare Schutzwirkung - wie dem Fachmann bekannt ist - eng mit dem Behandlungsverfahren verknüpft.

Besonders wirksam ist ein Imprägnierverfahren, bei dem das Holz, gegebenenfalls unter Druck oder Vakuum, einer Volltränkung unterworfen wird.

Die folgenden Beispiele dienen zur Erläuterung der Erfindung. Unter Teilen werden Massenteile und unter Prozenten Massenprozente verstanden, falls nicht anders angegeben.

## Beispiele

Basispolymerisat 1
Polybutadien, das wie folgt charakterisiert ist:
M̄n (dampfdruckosmometrisch bestimmt in Chlorbenzol): ca. 1 700;
Iodzahl [g Iod/100 g] (DIN 53 241): 445;
Doppelbindungsverteilung (IR-Analyse) in %, bezogen auf die gesamten Doppelbindungen: 73 cis und 25 trans (in Struktureinheiten, die durch 1,4-Polymerisation von 1,3-Butadien erhalten sind); 2 Vinyl (in Struktureinheiten, die durch 1,2-Polymerisation von 1,3-Butadien erhalten sind);
Viskosität [Pa.s] (DIN 53 214, 20°): 0,8.
Basispolymerisat 2
Polycyclopentadien, das wie folgt charakterisiert ist:
Isodzahl [g Iod/100 g]: 170 bis 180;
Schmelzpunkt: ca. 145°
Farbe (Gardner): 5
Dichte [g/cm$^3$]: 1,1 bis 1,2
Herstellung des Bindemittels 1
1 200 Teile Basispolymerisat 1 und 300 Teile Maleinsäureanhydrid (MSA) werden in Gegenwart von 1,5 Teilen Acetylaceton und 1,6 Teilen des handelsüblichen Antioxidans N,N'Diphenyl-p-phenylendiamin unter Stickstoff 1 h bei 180 °C und anschließend 3 h bei 190° erhitzt. Das erhaltene MSA-Addukt enthält ≦ 0,1% freies MSA und weist eine Säurezahl von 218 mg KOH/g (titriert in Pyridin/Wasser) auf.
Herstellung des Bindemittels 2
233 Teile Basispolymerisat 1, 58,3 Teile Basispolymerisat 2, 1,9 Teile Kupfernaphthenat und 0,1 Teile Acetylaceton werden unter Stickstoff auf 120 bis 140° erhitzt bis eine homogene Mischung erhalten wird. Nach Zugabe von 63,9 Teilen MSA wird innerhalb einer Stunde bei ansteigender Temperatur bis auf 190 °C erhitzt und die Reaktionsmischung 3 h bei dieser Temperatur belassen. Die Reaktionsmischung wird anschließend auf 130 °C abgekühlt, mit 58,7 Teilen Ethylenglykolmonoethylether (Ethylglykol) versetzt und 1 h bei dieser Temperatur belassen. Der erhaltene Halbester weist eine Säurezahl von 83 mg KOH/g auf.
Herstellung des Konzentrats 1 und des Behandlungsmittels 1

Die Komponenten werden in der angegebenen Reihenfolge bei 40 bis 60 °C gemischt.

Bindemittel 1 35,0 Teile
Ethylglykol 17,5 Teile
γ-Hexachlorcyclohexan 2,3 Teile
2,5-Dimethylfuran-3-carbonsäure-N-methoxy-N-cyclohexylamid (50 %ig in einer aliphatischen Benzinfraktion) 12,5 Teile
Sikkativ (in einer aliphatischen Benzinfraktion) 6,0 Teile
NH₃-Lösung (12,8 %ig) 19,0 Teile
Wasser 7,7 Teile
100,0 Teile

1 Teil des als klare Lösung erhaltenen Konzentrats 1 wird mit 4 Teilen Wasser gemischt. Das erhaltene Behandlungsmittel 1 ist eine klare Lösung und weist den pH-Wert 9,5 auf. Der Zustand des Konzentrats 1 und des Behandlungsmittels 1 ist nach einmonatiger Lagerung in einem geschlossenen Gefäß bei ca. 60° nahezu unverändert.

Herstellung des Behandlungsmittels 2

Die Komponenten werden in der angegebenen Reihenfolge bei Raumtemperatur gemischt.

Bindemittel 2 104,1 Teile
Ethylglykol 15,0 Teile
ethoxylierte Nonylphenole 5,0 Teile
γ-Hexachlorcyclohexan 2,6 Teile
2,5-Dimethylfuran-3-carbonsäure-N-methoxy-N-cyclohexylamid (50 %ig in einer aliphatischen Benzinfraktion) 15,6 Teile
Sikkativ (in einer aliphatischen Benzinfraktion) 2,5 Teile
Triethylamin (ca. 50 %ig) 40,0 Teile
Wasser 335,0 Teile
519,8 Teile

Das erhaltene Behandlungsmittel 2 ist eine klare Lösung und weist den pH-Wert 10,1 auf. Sein Zustand ist nach einmonatiger Lagerung in einem geschlossenen Gefäß bei ca. 60 °C nahezu unverändert.

Die erfindungsgemäßen Behandlungsmittel 1 und 2 zeigen eine sehr gute Lagerbeständigkeit, die nicht hinter derjenigen der Behandlungsmittel des oben geschilderten Standes der Technik zurücksteht.

**Versuche zur Charakterisierung der Lufttrocknung**

Das Trocknungsverhalten bei der Lufttrocknung von unmeldungsgemäß behandeltem Holz im Vergleich zum Stand der Technik wird durch die Staubtrockenzeiten von Überzügen der Behandlungsmittel auf Glasplatten charakterisiert. Dabei werden die erfindungsgemäßen Behandlungsmittel 3 und 4 und zum Vergleich das Behandlungsmittel A gemäß DE-PS 28 38 930 eingesetzt. Sie entsprechen den folgenden Rezepturen:

Behandlungsmittel 3
Bindemittel 1 30,0 Teile
NH₃-Lösung (25 %ig) 8,7 Teile

Kobalt- und Bleioctoate in einer aliphatischen Benzinfraktion (2,25 % Co, 14,0 % Pb) 1,2 Teile
Wasser 60,1 Teile
100,0 Teile

Behandlungsmittel 4
Bindemittel 2 30,0 Teile
NH₃-Lösung (25 %ig) 7,2 Teile
Kobalt- und Bleioctoate in einer aliphatischen Benzinfraktion (2,25 % Co, 14,0 % Pb) 1,2 Teile
Wasser 61,6 Teile
100,0 Teile

Behandlungsmittel A
Bindemittel (DE-PS 28 38 930, Spalte 7, Beispiel 1) 30,0 Teile
Essigsäure 4,6 Teile
Kobalt- und Bleioctoate in einer aliphatischen Benzinfraktion (2,25 % Co, 14,0 % Pb) 1,2 Teile
Wasser 64,2 Teile
100,0 Teile

Die Behandlungsmittel werden mit einer 100 μm-Ziehklinge auf Glasplatten aufgezogen und bei 20 °C gelagert. Die Staubtrockenzeiten werden gemäß DIN 55 934 bestimmt (Tabelle).

**Tabelle: Lufttrocknung auf Glasplatten**

| Behandlungsmittel | Staubtrockenzeit [h] |
|---|---|
| 3 | ca. 3,5 |
| 4 | ca. 3,5 |
| A | ca. 22 |

Zu ähnlichen Ergebnissen gelangt man, wenn man den Behandlungsmitteln 3, 4 und A übliche Mengen von Holzschutzwirkstoffen zusetzt.

**Patentansprüche**

1. Wasserverdünnbares Konzentrat und wäßriges Mittel zur Behandlung von Holz enthaltend
- ein mit Sikkativen lufttrocknend und mit Salzbildnern wasserlöslich gemachtes, organisches Bindemittel, dem Makromoleküle mit unverseifbarer Kohlenstoffkette zugrunde liegen,
- gegebenenfalls ein oder mehrere nicht wasserlösliche, organische Holzschutzwirkstoffe und/ oder ein oder mehrere wasserlösliche Holzschutzwirkstoffe, und
- gegebenenfalls in der Imprägnier- und Lackiertechnik übliche Zusatzstoffe, wobei porenverschließende Zusätze ausgeschlossen sind,
dadurch gekennzeichnet, daß
- das Bindemittel ein oder mehrere carboxylierte 1,3-(Cyclo)dienpolymerisate mit einer Säurezahl von 50 bis 250 [mg KOH/g], einem (mittleren) Gehalt an olefinischen Doppelbindungen entsprechend einer Iodzahl von ≧ 200 [g Iod/100 g] und einer relativen Molekülmasse ($\bar{M}n$) von 500 bis 5 000 ist, wobei im Falle mehrerer Polymerisate keines eine lodzahl von < 100 aufweist, und
- die Carboxylgruppen des Bindemittels mit einer Base aus der Gruppe, bestehend aus Alkalihydroxiden, Alkalicarbonaten, Alkalihydrogencarbonaten, Ammoniak, die Lufttrocknung nicht inhibierenden, niedermolekularen, wasserlöslichen Monoaminen und ihren Gemischen, teilweise oder vollständig neutralisiert sind, so daß der pH-Wert des Behandlungsmittels 6 bis 11,5 ist, wobei die Basenstärke und Basenmenge (Neutralisationsgrad) einerseits und die die Wasserlöslichkeit bestimmenden, strukturellen Parameter andererseits so aufeinander abgestimmt sind, daß das Bindemittel wasserlöslich ist bzw. gelöst vorliegt.

2. Wasserverdünnbares Konzentrat und wäßriges Mittel zur Behandlung von Holz nach Anspruch 1, dadurch gekennzeichnet, daß
- das Bindemittel ein oder mehrere carboxylierte, seitenständige Estergruppen enthaltende 1,3-(Cyclo)dienpolymerisate mit einer relativen Molekülmasse von 800 bis 3 000 ist, und
- die Carboxylgruppen des Bindemittels mit einer Base teilweise oder vollständig neutralisiert sind, so daß der pH-Wert des Behandlungsmittels 6,5 bis 10,5 ist.

3. Verfahren zur Behandlung von Holz mit einem wäßrigen Behandlungsmittel unter Anwendung der bekannten Methoden der Imprägniertechnik, wobei das Behandlungsmittel
- ein mit Sikkativen lufttrocknend und mit Salzbildnern wasserlöslich gemachtes, organisches Bindemittel, dem Makromoleküle mit unverseifbarer Kohlenstoffkette zugrunde liegen,
- gegebenenfalls ein oder mehrere nicht wasserlösliche, organische Holzschutzwirkstoffe und/ oder ein oder mehrere wasserlösliche Holzschutzwirkstoffe, und
- gegebenenfalls in der Imprägnier- und Lackiertechnik übliche Zusatzstoffe, ausgenommen porenverschließende Zusätze, enthält,
dadurch gekennzeichnet, daß
- das Bindemittel ein oder mehrere carboxylierte 1,3-(Cyclo)dienpolymerisate mit einer Säurezahl von 50 bis 250 [mg KOH/g], einem (mittleren) Gehalt an olefinischen Doppelbindungen entsprechend einer Iodzahl von ≥ 200 [g Iod/100 g] und einer relativen Molekülmasse ($\bar{M}n$) von 500 bis 5 000 ist, wobei im Falle mehrerer Polymerisate keines eine Iodzahl von < 100 aufweist, und
- die Carboxylgruppen des Bindemittels mit einer Base aus der Gruppe, bestehend aus Alkalihydroxiden, Alkalicarbonaten, Alkalihydrogencarbonaten, Ammoniak, die Lufttrocknung nicht inhibierenden, niedermolekularen, wasserlöslichen Monoaminen und ihren Gemischen, teilweise oder vollständig neutralisiert sind, so daß der pH-Wert des Behandlungsmittels 6 bis 11,5 ist, wobei die Basenstärke und Basenmenge (Neutralisationsgrad) einerseits und die die Wasserlöslichkeit bestimmenden, strukturellen Parameter andererseits so aufeinander abgestimmt sind, daß das Bindemittel wasserlöslich ist bzw. gelöst vorliegt.

4. Verfahren zur Behandlung von Holz mit einem wäßrigen Behandlungsmittel gemäß Anspruch 3, dadurch gekennzeichnet, daß
- das Bindemittel ein oder mehrere carboxylierte, seitenständige Estergruppen enthaltende 1,3-(Cyclo)-dienpolymerisate mit einer relativen Molekülmasse von 800 bis 3 000 ist, und
- die Carboxylgruppen des Bindemittels mit einer Base teilweise oder vollständig neutralisiert sind, so daß der pH-Wert des Behandlungsmittels 6,5 bis 10,5 ist.


**Claims**

1. A water-dilutable concentrate or an aqueous composition for treating wood, containing
- an organic binder which dries in air with the aid of a siccative, which is rendered water-soluble with the aid of a salt-former and the macromolecules of which arebased on an unsaponifiable hydrocarbon chain,
- optionally one or more water-insoluble, organic woodprotecting agents and/or one or more water-soluble woodprotecting agents, and
- optionally additives conventional in the impregnation and coating industries, pore-closing additives being excluded,
characterised in that
- the binder is one or more carboxylated 1,3-(cyclo)diene polymers having an acid number of 50 to 250 [mg KOH/g], an (average) content of olefinic double bonds corresponding to an iodine number of ≥ 200 [g iodine/100g] and a relative molecular weight ($\bar{M}_n$) of 500 to 5000, provided that if more than one polymer is present none of them has an iodine number of < 100, and
- the carboxyl groups of the binder are partially or completely neutralised with the aid of a base selected from alkali metal hydroxides, alkali metal carbonates, alkali metal bicarbonates, ammonia, lower molecular weight water-soluble monoamines which do not inhibit air drying, and their mixtures, so that the pH value of the treating composition is 6 to 11.5, the strength and amount of base (degree of neutralisation) on the one hand and the structural parameters governing the water-solubility on the other hand being so related to one another that the binder is water-soluble or is present in dissolved form, as the case may be.

2. A water-dilutable concentrate or an aqueous composition for treating wood according to claim 1, characterised in that
- the binder is one or more carboxylated 1,3-(cyclo)diene polymers containing lateral ester groups and having a relative molecular weight of 800 to 3000,
- the carboxyl groups of the binder are partially or completely neutralised with a base so that the pH value of the treating composition is 6.5 to 10.5.

3. A process for treating wood with the aid of an aqueous treating composition using a known impregnation method, in which the treating composition contains

- an organic binder which dries in air with the aid of a siccative, which is rendered water-soluble with the aid of a salt-former, and the macromolecules of which are based on an unsaponifiable hydrocarbon chain,

- optionally one or more water-insoluble, organic woodprotecting agents and/or one or more water-soluble woodprotecting agents, and

- optionally additives conventional in the impregnation and coating industries, pore-closing additives being excluded,

    characterised in that

- the binder is one or more carboxylated 1,3-(cyclo)diene polymers having an acid number of 50 to 250 [mg KOH/g], an (average) content of olefinic double bonds corresponding to an iodine number of $\geqq$ 200 [g iodine/100g] and a relative molecular weight ($\bar{M}_n$) of 500 to 5000, provided that if more than one polymer is present none of them has an iodine number of <100, and

- the carboxyl groups of the binder are partially or completely neutralised with the aid of a base selected from alkali metal hydroxides, alkali metal carbonates, alkali metal bicarbonates, ammonia, lower molecular weight water-soluble monoamines which do not inhibit the air drying, and their mixtures, so that the pH value of the treating composition is 6 to 11.5, the strength and amount of the base (degree of neutralisation) on the one hand and the structural parameters governing the water-solubility on the other hand being so related to one another that the binder is water-soluble or is present in dissolved form, as the case may be.

4. A process for treating wood with the aid of an aqueous treating composition according to claim 3, characterised in that

- the binder is one or more carboxylated 1,3-(cyclo)diene polymers containing lateral ester groups and having a relative molecular weight of 800 to 3000, and

- the carboxyl groups of the binder are partially or completely neutralised with the aid of a base, so that the pH value of the treating composition is 6.5 to 10.5.

**Revendications**

1. Concentré diluable par l'eau et agent aqueux pour le traitement du bois, contenant

- un liant organique séchant à l'air avec des siccativants et rendu hydrosoluble avec des formateurs de sels, qui est à base de macromolécules à chaine carbonée non saponifiable,

- éventuellement une ou plusieurs substances actives organiques de protection du bois non solubles dans l'eau et/ou une ou plusieurs subtances actives de protection du bois hydrosolubles, et

- éventuellement des additifs usuels dans la technique d'imprégnation et de peinturage, les additifs qui bouchent les pores étant exclus, caractérisé par le fait que

- le liant est formé d'un ou plusieurs produits carboxylés de polymérisation de 1,3-(cyclo)-diène ayant un indice d'acide de 50 à 250 (mg de KOH/g), une teneur (moyenne) en doubles liaisons oléfiniques correspondant à un indice d'iode d'au moins 200 (g d'iode/100 g) et une masse moléculaire relative ($\bar{M}n$) de 500 à 5 000, tandis que dans le cas de plusieurs produits de polymérisation aucun ne présente un indice d'iode inférieur à 100, et que

- les groupes carboxyle du liant sont neutralisés partiellement ou complètement par une base du groupe formé des hydroxydes alcalins, des carbonates alcalins, des hydrogéno-carbonates alcalins, de l'ammoniac, des mono-amines hydrosolubles de bas poids moléculaire n'inhibant pas le séchage à l'air, et de leurs mélanges, de sorte que la valeur du pH de l'agent de traitement est de 6 à 11,5, la force de la base et la quantité de base (degré de neutralisation), d'une part, et les paramètres structuraux qui déterminent la solubilité dans l'eau, d'autre part, étant harmonisés entre eux de telle sorte que le liant est hydrosoluble ou se présente à l'état dissous.

2. Concentré diluable par l'eau et agent aqueux pour le traitement du bois selon la revendication 1, caractérisé par le fait que:

- le liant est formé d'un ou plusieurs produits carboxylés de polymérisation de 1,3-(cyclo)-diène contenant des groupes ester latéraux, ayant une masse moléculaire relative de 800 à 3 000, et que

- les groupes carboxyle du liant sont neutralisés partiellement ou totalement par une base, de sorte que la valeur du pH de l'agent de traitement est de 6,5 à 10,5.

3. Procédé pour le traitement du bois par un agent de traitement aqueux avec application des modes opératoires connus de la technique d'imprégnation, l'agent de traitement contenant:

    un liant organique séchant à l'air avec des siccativants et ren du hydrosoluble avec des formateurs de sels, qui est à base de macromolécules à chaine carbonée non saponifiable,

- éventuellement une ou plusieurs substances actives organiques de protection du bois non solubles dans l'eau et/ou une ou plusieurs subtances actives de protection du bois hydrosolubles, et

- éventuellement des additifs usuels dans la technique d'imprégnation et de peinturage, les additifs qui bouchent les pores étant exclus, caractérisé par le fait que

- le liant est formé d'un ou plusieurs produits carboxylés de polymérisation de 1,3-(cyclo)-diène ayant un indice d'acide de 50 à 250 (mg de KOH/g), une teneur (moyenne) en doubles liaisons oléfiniques correspondant à un indice d'iode d'au moins 200 (g d'iode/100 g) et une masse moléculaire relative ($\overline{M}n$) de 500 à 5 000, tandis que dans le cas de plusieurs produits de polymérisation aucun ne présente un indice d'iode inférieur à 100, et que

-les groupes carboxyle du liant sont neutralisés partiellement ou complètement par une base du groupe formé des hydroxydes alcalins, des carbonates alcalins, des hydrogéno-carbonates alcalins, de l'ammoniac, des mono-amines hydrosolubles de bas poids moléculaire n'inhibant pas le séchage à l'air et de leurs mélanges, de sorte que la valeur du pH de l'agent de traitement est de 6 à 11,5, la force de la base et la quantité de base (degré de neutralisation), d'une part, et les paramétres structuraux qui déterminent la solubilité dans l'eau, d'autre part, étant harmonisés entre eux de telle sorte que le liant est hydrosoluble ou se présente à l'état dissous.

4. Procédé pour le traitement du bois par un agent de traitement aqueux selon la revendication 3, caractérisé par le fait que

- le liant est formé d'un ou plusieurs produits carboxylés de polymérisation de 1,3-(cyclo)-diène contenant des groupes ester latéraux, ayant une masse moléculaire relative de 800 à 3 000, et que

- les groupes carboxyle du liant sont neutralisés partiellement ou totalement par une base, de sorte que la valeur du pH de l'agent de traitement est de 6,5 à 10,5.